# EUROPÄISCHE PATENTANMELDUNG

(11) **EP 4 089 879 A1**
(43) Veröffentlichungstag der Anmeldung: **16.11.2022**
(21) Anmeldenummer: 22171740.8
(22) Anmeldetag: 05.05.2022
(51) Int. Cl.: H02J 7/34

(54) **VERFAHREN UND VORRICHTUNG ZUR NETZUNABHÄNGIGEN VERSORGUNG MIT ELEKTRISCHER ENERGIE**

(30) Priorität: 11.05.2021 DE 102021112275
(71) Anmelder: Enertools GmbH, 26605 Aurich (DE)
(72) Erfinder: Freese, Lothar, 26605 Aurich (DE)
(74) Vertreter: Jabbusch, Matthias

(57) **Zusammenfassung**

Die Erfindung betrifft ein Verfahren zum Betreiben einer netzunabhängigen Versorgung mit elektrischer Energie, bei dem vor Ort eine Gleichspannung erzeugt wird, die Gleichspannung mit wenigstens einem Wechselrichter in eine Wechselspannung gewandelt wird und die Wechselspannung genutzt werden kann, um wenigstens einen anzuschließenden, elektrischen Verbraucher mit Strom zu versorgen. Dieses Verfahren zeichnet sich dadurch aus, dass bereitgestellte Gleichspannung, die nicht von dem anzuschließenden, elektrischen Verbraucher abgenommen wird, als Gleichstrom einem Stromspeicher zugeführt wird, und dass dem anzuschließenden, elektrischen Verbraucher in Abhängigkeit von dessen Bedarf in dem Stromspeicher gespeicherte elektrische Energie bereitgestellt werden kann, so dass von dem anzuschließenden, elektrischen Verbraucher für eine bestimmte Zeitspanne mehr Strom abgenommen werden kann als in dieser Zeitspanne erzeugt wird. Des Weiteren betrifft die Erfindung eine Vorrichtung zur netzunabhängigen Versorgung mit elektrischer Energie.

## Beschreibung

Die Erfindung betrifft ein Verfahren zum Betreiben einer netzunabhängigen Versorgung mit elektrischer Energie, bei dem vor Ort eine Gleichspannung erzeugt wird, die Gleichspannung mit wenigstens einem Wechselrichter in eine Wechselspannung gewandelt wird und die Wechselspannung genutzt werden kann, um wenigstens einen anzuschließenden, elektrischen Verbraucher mit Strom zu versorgen. Weiter betrifft die Erfindung auch eine Vorrichtung zur netzunabhängigen Versorgung mit elektrischer Energie aufweisend wenigstens einen Stromerzeuger zur Bereitstellung der Gleichspannung, wenigstens einen Anschluss für einen elektrischen Verbraucher, wenigstens einen Wechselrichter, der zwischen dem Stromerzeuger und dem Anschluss für den elektrischen Verbraucher geschaltet ist sowie eine Steuer- und Bedieneinheit.

Indem das Verfahren und die Vorrichtung eine netzunabhängige Versorgung mit elektrischer Energie sicherstellen, kann diese an einem nahezu beliebigen Ort bereitgestellt werden. Ein solcher Ort kann bspw. ein Standort einer zu errichtenden oder errichteten, aber noch nicht an ein Versorgungsnetz angeschlossenen, Windenergieanlage sein. Diese müssen aufgrund Ihrer Bauhöhe unter anderem mit Positionsleuchten gegen Flugverkehr gesichert werden. Gemäß dem Stand der Technik werden hierzu meist Stromerzeuger mit Verbrennungsmotoren eingesetzt. Stromerzeuger mit Verbrennungsmotoren haben jedoch den Nachteil, dass diese regelmäßig und in relativ kurzen Zeitabständen betankt werden müssen. Damit sind diese zwar netzunabhängig betreibbar, bedingen aber einen größeren Betreuungsauffand.

Andere netzunabhängige Stromerzeuger, wie zum Beispiel Solarmodule, müssen zwar nicht betankt werden, weisen dafür, wenn diese ähnlich wie ein Stromerzeuger mit Verbrennungsmotor transportabel und vielseitig verwendbar sein sollen, im Regelfall geringere Leistungen und damit weniger vielfältige Einsatzverwendungen auf.

Aufgabe der Erfindung ist es daher ein Verfahren und eine Vorrichtung bereitzustellen, mit der die vorgenannten Nachteile umgangen werden und das bzw. die gleichzeitig möglichst vielseitig einsetzbar ist.

Die Lösung dieser Aufgabe erfolgt verfahrensmäßig mit den Merkmalen des Anspruchs 1 und vorrichtungsmäßig mit den Merkmalen des Anspruchs 7. Weiterbildungen und vorteilhafte Ausgestaltungen sind in den jeweils nachgeordneten Ansprüchen angegeben.

Das Verfahren zum Betreiben einer netzunabhängigen Versorgung mit elektrischer Energie, bei dem vor Ort eine Gleichspannung erzeugt wird, die Gleichspannung mit wenigstens einem Wechselrichter in eine Wechselspannung gewandelt wird und die Wechselspannung genutzt werden kann, um wenigstens einen anzuschließenden, elektrischen Verbraucher mit Strom zu versorgen, zeichnet sich erfindungsgemäß dadurch aus, dass bereitgestellte Gleichspannung, die nicht von dem anzuschließenden, elektrischen Verbraucher abgenommen wird, als Gleichstrom einem Stromspeicher zugeführt wird, und dass dem anzuschließenden, elektrischen Verbraucher in Abhängigkeit von dessen Bedarf in dem Stromspeicher gespeicherte elektrische Energie bereitgestellt werden kann, so dass von dem anzuschließenden, elektrischen Verbraucher für eine bestimmte Zeitspanne mehr Strom abgenommen werden kann als in dieser Zeitspanne erzeugt wird.

Durch Kombination von Stromspeicher und Brennstoffzelle als Stromerzeuger kann bedarfsgerecht Strom bereitgestellt werden, wobei eine abnehmbare Strommenge vorteilhafterweise größer sein kann als eine momentan von dem Stromerzeuger bereitgestellte Strommenge. Die Stromabnahme und die Stromerzeugung sind damit möglichst flexibel, so dass unterschiedliche Stromverbraucher mit zum Teil stark verschiedenem Bedarf in vielfältigen Situationen anschließbar sind.

Als Ausgangsspannung, um den Wechselstrom zu erzeugen, werden der Stromspeicher und der Stromerzeuger vorteilhafterweise mit einer Netzspannung von 24 V und 500 W betrieben. Die 24 V und 500 W entsprechen dabei nach einer Weiterbildung sowohl dem maximalen Ladestrom als auch einer dauerhaft für einen Verbraucher zur Verfügung stellbaren Leistung. Einerseits ermöglicht die Gleichspannung von 24 V als Netzspannung die Verwendung von handelsüblichen Komponenten und andererseits kann die dauerhaft bereitzustellende Leistung aufgrund dessen, dass der Strom mit einer Brennstoffzelle erzeugt wird, über einen wesentlich längeren Zeitraum als bei anderen Stromerzeugern aufrecht erhalten werden. Insbesondere beträgt dieser Zeitraum zwischen 25 und 30 Tagen. Eine vorteilhafterweise mit Methanol zu betreibende Brennstoffzelle benötigt für den vorgenannten Zeitraum dann lediglich einen Vorrat von ca. 75 l Methanol.

Nach einer nächsten Weiterbildung entspricht der maximale Ladestrom, mit dem das Verfahren betrieben wird, bis zu zwei Dritteln der maximal möglichen Leistung der Brennstoffzelle. Indem die maximal mögliche Leistung der Brennstoffzelle nicht ausgereizt wird, kann mit Vorteil eine längere Nutzungsdauer erreicht werden. Die maximal mögliche Leistung der Brennstoffzelle beträgt bei einem Betrieb mit 24 V und 500 W demnach 800 W.

Gemäß einer alternativen Ausgestaltung kann das Verfahren beispielsweise auch mit einer Brennstoffzelle mit 1500 W betrieben werden, wobei der maximale Ladestrom sowie die für einen Verbraucher zur Verfügung stellbare Leistung dann 48 V und 1000 W beträgt.

Nach einer Weiterbildung ermöglicht eine Synchronisation von mehr als einem Wechselrichter, dass Starkstrom, insbesondere mit einer Spannung von wenigstens 400 V und 3600 W, bereitgestellt werden kann. Die Wechselrichter werden dazu derart aufeinander abgestimmt, dass die Gleichspannung entsprechend hochtransformiert und in Wechselspannung gewandelt wird. Bevorzugt wird daher mit dem Verfahren die Spannung in den Wechselrichtern von 24 V Gleichspannung auf 230 V oder 400V oder 230 V und 400 V transformiert.

Weiter ist vorgesehen, dass ein jeweiliger Ladezustand des Stromspeichers erfasst werden kann und in Abhängigkeit von dem Ladezustand des Stromspeichers alle weiteren Vorgänge der netzunabhängigen Versorgung mit elektrischer Energie gesteuert und geregelt werden. Dadurch ist gewährleistet, dass der Stromspeicher nicht beschädigt wird, zum Beispiel durch Tiefentladung, und dauerhaft seine Funktion behält. Zudem ist erreicht, dass während des Betriebes auch über einen längeren Zeitraum eine definierte Strommenge abgenommen werden kann.

Im Einzelnen wird dazu der wenigstens eine Wechselrichter nach einer Weiterbildung in Abhängigkeit von dem Ladezustand des Stromspeichers zugeschaltet und abgeschaltet. Die Abschaltung des Wechselrichters stellt dabei sicher, dass es zu keiner Tiefentladung des Stromspeichers kommt. Bei einer Anlage mit einer stromerzeugerseitigen Netzspannung von 24 V erfolgt eine Abschaltung der Wechselrichter vorteilhafterweise bei einer an dem Stromspeicher ermittelten Spannung von 24,5 V und eine Zuschaltung der Wechselrichter bei 26,5 V.

Zusätzlich zu der Abschaltung der Wechselrichter, insbesondere bei einer stromerzeugerseitigen Netzspannung von 24,5 V im System, kann ein weiterer Sicherheitsmechanismus vorgesehen sein, der den Stromspeicher oder das gesamte System der Vorrichtung bei Erreichen einer bestimmten Spannungsuntergrenze abschaltet. Bei einem System mit einer stromerzeugerseitigen Netzspannung von 24 V liegt diese Spannungsuntergrenze vorteilhafterweise bei 22,5 V.

Weiter kann ein von dem Stromerzeuger bereitgestellter Ladestrom in Abhängigkeit von dem Ladezustand des Stromspeichers gesteuert werden. Die Steuerung des Ladestroms betrifft dabei einerseits eine Abschaltung des Stromerzeugers, wenn der Stromspeicher vollständig geladen ist und an dem Anschluss für wenigstens einen Verbraucher kein Strom abgenommen wird. Eine solche Abschaltung erfolgt in einem System mit einer Netzspannung von 24 V bevorzugt bei einer an dem Stromspeicher anliegenden Spannung von 29 V.

Andererseits ist nach einer Weiterbildung vorgesehen, dass der Ladestrom bei einer bestimmten an dem Stromspeicher anliegenden Spannung genutzt wird, um den Stromspeicher zu laden. Bevorzugt erfolgt dies ab einer an dem Stromspeicher anliegenden Spannung von 25,5 V und niedriger. Verfügbarer Ladestrom wird so frühzeitig genutzt, um einem Entladen des Stromspeichers entgegenzuwirken.

Bei einer von 24 V abweichenden stromerzeugerseitigen Netzspannung sind entsprechend andere Werte festzulegen, wobei diese vorteilhafterweise entweder prozentual oder absolut denen bei einer stromerzeugerseitigen Netzspannung von 24 V entsprechen.

Weiter betrifft die Erfindung eine Vorrichtung zur netzunabhängigen Versorgung mit elektrischer Energie aufweisend wenigstens einen Stromerzeuger zur Bereitstellung von Gleichspannung, wenigstens einen Anschluss für einen elektrischen Verbraucher, wenigstens einem Wechselrichter, der zwischen dem Stromerzeuger und dem Anschluss für den elektrischen Verbraucher geschaltet ist sowie eine Steuer- und Bedieneinheit. Diese Vorrichtung zeichnet sich erfindungsgemäß dadurch aus, dass der Stromerzeuger durch wenigstens eine Brennstoffzelle gebildet ist, dass der Brennstoffzelle und dem Wechselrichter wenigstens ein Stromspeicher zugeordnet ist, und dass die Brennstoffzelle, der Wechselrichter und der Stromspeicher jeweils über Verteilerschienen elektrisch leitend miteinander verbunden sind.

Der Aufbau mit einer zentral zwischen der Brennstoffzelle, dem Wechselrichter und dem Stromspeicher angeordneten Verteilerschiene schafft eine besonders effiziente Koppelung der einzelnen Komponenten miteinander. Die mittels der Brennstoffzelle bereitgestellte elektrische Energie kann so höchst flexibel dem Stromspeicher oder dem Wechselrichter zugeführt werden, wobei in Abhängigkeit von einem momentanen Bedarf wenigstens eines angeschlossenen elektrischen Verbrauchers auch Teilströme auf die einzelnen Komponenten, insbesondere den Wechselrichter und den Stromspeicher, verteilt werden können.

In weiterer Ausgestaltung sind insgesamt zwei Verteilerschienen vorgesehen, von denen eine erste Verteilerschiene einem jeweils positiven Pol der Brennstoffzelle, des Wechselrichters und des Stromspeichers zugeordnet ist und eine zweite Verteilerschiene einem jeweils negativen Pol der Brennstoffzelle, des Wechselrichters und des Stromspeichers zugeordnet ist. An die Verteilerschienen können dabei ohne weiteres zusätzliche Stromspeicher oder Wechselrichter angeschlossen werden. Die Anzahl der Stromspeicher oder Wechselrichter der Vorrichtung wird dabei höchstens durch die Anzahl vorhandener Steckplätze an den Verteilerschienen begrenzt. Indem alle Komponenten mit jeweils ihrem positiven und negativen Pol an die jeweilige Verteilerschiene angeschlossen sind, kann durch entsprechende Schaltung der Verteilerschienen und Komponenten auf einfache Weise eine bedarfsgerechte Steuerung erfolgen.

Nach einer Weiterbildung ist in die Vorrichtung daher mehr als ein Wechselrichter integriert, wobei alle Wechselrichter derart miteinander synchronisiert sind, dass an dem Anschluss für einen elektrischen Verbraucher Starkstrom, insbesondere mit einer Spannung von wenigstens 400 V, bereitgestellt werden kann. Die Bereitstellung von Starkstrom mit einer Brennstoffzelle als Stromerzeuger ist dabei nur möglich, indem die Wechselrichter entsprechend programmiert sind.

Gemäß einem bevorzugten Aufbau ist dabei einer der Wechselrichter als "Master" ausgebildet, der von der Steuer- und Bedieneinheit unmittelbar angesteuert wird, und die anderen Wechselrichter sind als von dem Master abhängige "Slaves" steuerungstechnisch an den Master angeschlossen. Eine solche Verschaltung der Wechselrichter miteinander hat den Vorteil, dass die Bedienungseinheit nur mit dem als Master ausgebildeten Wechselrichter unmittelbar kommunizieren muss und die weiteren Wechselrichter dann über den Master aufeinander abgestimmt Steuerbefehle erhalten.

Da die Vorrichtung stromnetzunabhängig eingesetzt werden soll, befinden sich deren Einsatzorte zumeist recht abgelegen, sodass ein unmittelbarer Zugriff durch vor Ort verfügbares Personal nicht immer möglich ist. Gemäß einer Weiterbildung ist daher vorgesehen, dass die Steuer- und Bedieneinheit eine Fernzugriffseinrichtung aufweist. Bedienung und Steuerung der Vorrichtung können somit von einem beliebigen Ort durchgeführt werden, wodurch mit Vorteil weniger Reisekosten und damit geringere Personalkosten verbunden sind.

Als Fernzugriffseinrichtung kann in weiterer Ausgestaltung ein GSM-Modul vorgesehen sein. Die Steuerung erfolgt dann über ein jeweiliges Mobilfunknetz, welches zumeist relativ flächendeckend und damit auch an abgelegenen Orten verfügbar ist.

In Verbindung mit den abgelegenen Einsatzorten ist weiterhin vorteilhafterweise vorgesehen, dass alle Komponenten der Vorrichtung vor unberechtigtem Zugriff geschützt sind. Hierzu können die Komponenten in einer transportablen Box angeordnet sein, deren Zugriffsöffnungen verschließbar sind. Indem die Box mit den Komponenten transportabel ist, ist zudem erreicht, dass diese auf einfache Weise an ihren jeweiligen Einsatzort, beispielsweise eine im Aufbau befindliche Energieanlage, verbracht werden können. Transportabel umfasst dabei alle solche Boxen, welche auf einem Anhänger oder einem Lkw verladen werden können, mit einem Hubwagen, Gabelstapler oder Frontlader verfahrbar sind oder auch händisch verschoben werden können. Vorteilhafterweise weist die Box Abmessungen wie folgt auf: Höhe: 102 cm ohne Rollen und 114,5 cm mit Rollen, eine Breite von 83 cm sowie eine Tiefe von 110 cm ohne Anbauteile und 124 cm mit einem als Kabelhalter ausgebildeten Anbauteil.

Um lange Standzeiten von bis zu 25 oder 30 Tagen an deren Einsatzorten sicherzustellen, ist nach einer Weiterbildung zudem vorgesehen, dass die Brennstoffzelle der Vorrichtung mit Methanol als Primärenergie betreibbar ist. Hierfür ist dann entsprechend Raum für Methanolbehälter oder einen Methanoltank innerhalb der Box vorzusehen.

Elektrisch abgesichert ist die Vorrichtung nach einer Weiterbildung dadurch, dass alle Anschlüsse jeweils mit einer Fehlerstrom-Schutzeinrichtung versehen sind, insbesondere ist der Anschluss für einen elektrischen Verbraucher mit einer Spannung von 400 V mit einer ersten Fehlerstrom-Schutzeinrichtung abgesichert und der Anschluss für einen Verbraucher mit 230 V ist mit einer zweiten Fehlerstrom-Schutzeinrichtung abgesichert.

Ein Ausführungsbeispiel der Erfindung, aus dem sich weitere erfindungswesentliche Merkmale ergeben können, ist in der Zeichnung dargestellt. Gleiche Teile sind dabei in allen Zeichnungen mit gleichen Bezugszeichen versehen. Es zeigen:
- Fig. 1:: eine schematische Darstellung einer erfindungsgemäßen Vorrichtung; und
- Fig. 2:: eine perspektivische Darstellung der Vorrichtung gemäß Fig. 1.

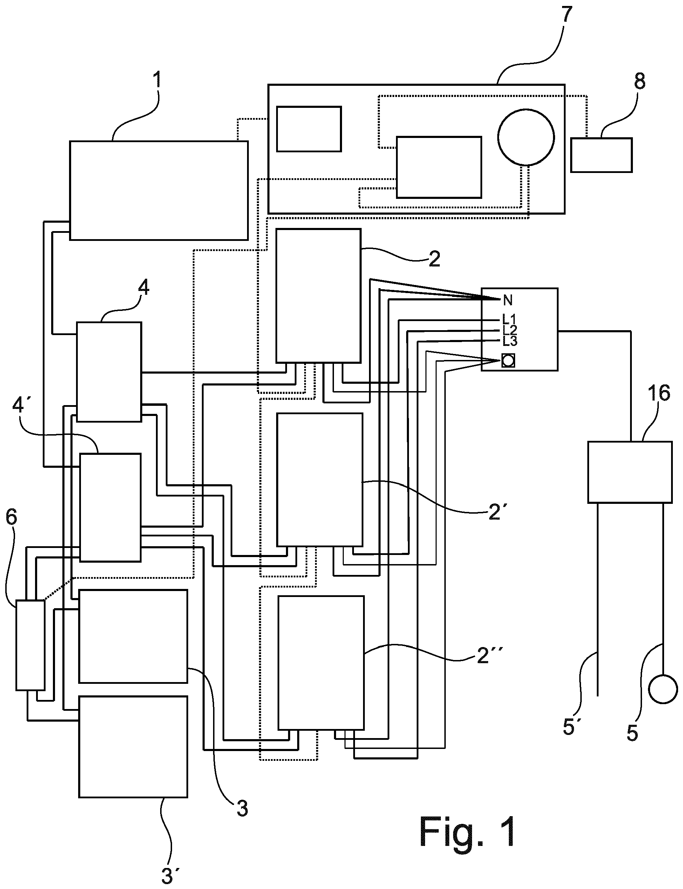

Aus der schematischen Darstellung gemäß Figur 1 ist ersichtlich, dass die erfindungsgemäße Vorrichtung im Wesentlichen aus einer Brennstoffzelle 1 als Stromerzeuger, drei Wechselrichtern 2, 2', 2", zwei Stromspeichern 3, 3', zwei Verteilerschienen 4, 4' sowie zwei Anschlüssen 5, 5' für elektrische Verbraucher gebildet ist. Die Brennstoffzelle 1, die Stromspeicher 3, 3' und zumindest stromerzeugerseitig auch die Wechselrichter 2, 2', 2" sind jeweils mit ihrem positiven Pol an die Verteilerschiene 4 und mit ihrem negativen Pol an die Verteilerschiene 4' angeschlossen. In den Verteilerschienen 4, 4' sind somit alle positiven Pole bzw. negativen Pole der vorgenannten Komponenten zusammengeführt, so dass mit der Brennstoffzelle 1 erzeugter Strom immer über die Verteilerschienen 4, 4' zu den Wechselrichtern 2, 2', 2" oder den Stromspeichern 3, 3' geführt wird. Ebenso wird von den Stromspeichern 3, 3' bereitgestellter Strom immer über die Verteilerschienen 4, 4' zu den Wechselrichtern 2, 2', 2" geführt. Zwischen den Stromspeichern 3, 3' an deren negativem Pol und der Verteilerschiene 4' ist eine Spannungsmesseinheit 6 in eine entsprechend stromführende Verbindungsleitung geschaltet.

Sämtliche Verbindungsleitungen, in denen von der Brennstoffzelle 1 erzeugter oder von den Stromspeichern 3, 3' bereitgestellter Strom zu den Anschlüssen 5, 5' für elektrische Verbraucher strömen kann, sind in der schematischen Darstellung der Figur 1 mit durchgezogenen Linien dargestellt. Zu einer Steuer- und Bedieneinheit 7 hinführende und von einer Steuer- und Bedieneinheit 7 wegführende Kommunikationsleitungen der Vorrichtung sind mit gestrichelten Linien dargestellt. Die Steuer- und Bedieneinheit 7 setzt sich aus verschiedenen, den einzelnen Komponenten der Vorrichtung, insbesondere der Brennstoffzelle 1, den Wechselrichtern 2, 2', 2" sowie der Spannungsmesseinheit 6 zugeordneten Einzelteilen zusammen. Von der Steuer- und Bedieneinheit 7 wird dabei nur ein einzelner Wechselrichter 2 unmittelbar angesteuert. Dieser Wechselrichter 2 ist als "Master" definiert, von dem die weiteren Wechselrichter 2', 2" abhängen. Die weiteren Wechselrichter 2', 2" sind damit als "Slaves" definiert. Indem die Wechselrichter 2, 2', 2" als "Master" und "Slaves" in die Vorrichtung eingebunden sind, können diese miteinander synchronisiert werden. Hierfür sind diese entsprechend programmiert. Der Steuer- und Bedieneinheit 7 bzw. den Einzelteilen ist wiederum ein GSM-Modul als Fernzugriffseinrichtung 8 zugeordnet.

Anschlussseitig von den Wechselrichtern 2, 2', 2" zu den Anschlüssen 5, 5' für elektrische Verbraucher abgehende Stromleitungen werden gebündelt und über eine Fehlerstrom-Schutzeinrichtung 16 zu dem mit einer Spannung von 230 V betriebenen Anschluss 5 und dem mit einer Spannung von 400 V betriebenen Anschluss 5' geleitet.

Je nachdem, wie viel Strom zu einem bestimmten Zeitpunkt abgenommen wird, kann dieser entweder durch die Brennstoffzelle 1 erzeugt werden oder von den Stromspeichern 3, 3' bereitgestellt werden und zu den Anschlüssen 5, 5' für elektrische Verbraucher geleitet werden. Wird an den Anschlüssen 5, 5' für elektrische Verbraucher weniger Strom abgenommen als von der Brennstoffzelle 1 erzeugt wird, wird überschüssiger Strom zum Laden der Stromspeicher 3, 3' verwendet. Um eine Tiefentladung oder ein Überladen der Stromspeicher 3, 3' zu verhindern, wird der Strom innerhalb der Vorrichtung entsprechend gesteuert und verteilt. Gegebenenfalls werden hierzu auch einzelne Komponenten wie die Brennstoffzelle 1 oder die Wechselrichter 2, 2', 2" abgeschaltet.

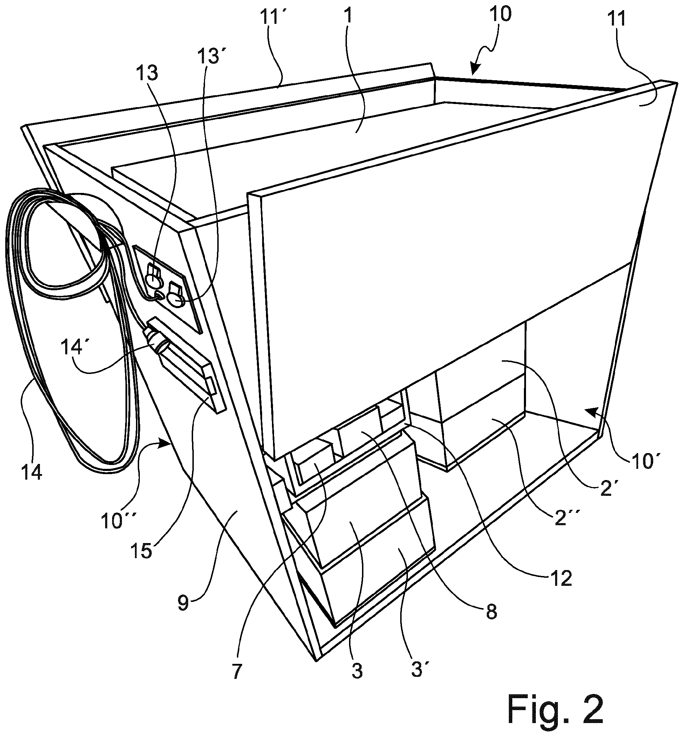

Figur 2 verdeutlicht den Einbau der einzelnen Komponenten aus der schematischen Darstellung gemäß Figur 1 in eine transportable Box 9. Die Box 9 weist insgesamt drei Zugriffsöffnungen 10, 10', 10" auf, um an die in der Box 9 verbauten Komponenten zu gelangen. Eine erste Zugriffsöffnung 10 ist durch einen nicht dargestellten Deckel verschließbar. Über diese Zugriffsöffnung 10 ist die Brennstoffzelle 1 zugänglich. Der nicht dargestellte Deckel wird zum Verschließen der Zugriffsöffnung 10 einfach aufgelegt und über Spannverschlüsse an Ösen gehalten. Die Zugriffsöffnungen 10' und 10" sind jeweils mit Klappdeckeln 11, 11' verschließbar, wobei in Figur 2 beide Klappdeckel 11, 11' geöffnet dargestellt sind. Die Zugriffsöffnung 10' ist eine Wartungsöffnung für die weiteren Komponenten. Dies sind im Einzelnen die Stromspeicher 3, 3', die Wechselrichter 2, 2', 2" und die Steuer- und Bedieneinheit 7 mit dem GSM-Modul als Fernzugriffseinrichtung 8. Während die Stromspeicher 3, 3' und die Wechselrichter 2, 2', 2" jeweils an ihren Positionen fest verbaut sind, ist die Steuer- und Bedieneinheit 7 mit dem GSM-Modul als Fernzugriffseinrichtung 8 in einem ausziehbaren Schubfach 12 angeordnet. Durch Ausziehen des Schubfachs 12 ist die Bedienung besonders komfortabel. Die weitere Zugriffsöffnung 10" dient der Aufnahme von Methanolbehältern oder einem Methanoltank, welche in einer entsprechend zugeordneten Ausnehmung positioniert werden können und über eine Zuleitung mit der Brennstoffzelle 1 verbunden werden können.

Außenseitig an der Box 9 sind die Anschlüsse 5, 5' für elektrische Verbraucher erkennbar. Der Anschluss 5, der mit einer Spannung von 230 V betrieben wird, weist zwei in der Wandung der Box 9 angeordnete Steckdosen 13, 13' auf. Der Anschluss 5', der mit einer Spannung von 400 V betrieben wird, weist eine über ein Kabel 14 an die Box 9 angebundene Steckdose 14' auf. Unterhalb der Steckdosen 13, 13' und dem aus der Box 9 geführten Kabel 14 ist ein Sicherungskasten 15 angeordnet.

## Patentansprüche

1. Verfahren zum Betreiben einer netzunabhängigen Versorgung mit elektrischer Energie, bei dem vor Ort eine Gleichspannung erzeugt wird, die Gleichspannung mit wenigstens einem Wechselrichter (2, 2', 2") in eine Wechselspannung gewandelt wird und die Wechselspannung genutzt werden kann, um wenigstens einen anzuschließenden, elektrischen Verbraucher mit Strom zu versorgen,
**dadurch gekennzeichnet,**
**dass** bereitgestellte Gleichspannung, die nicht von dem anzuschließenden, elektrischen Verbraucher abgenommen wird, als Gleichstrom einem Stromspeicher (3, 3') zugeführt wird, und
**dass** dem anzuschließenden, elektrischen Verbraucher in Abhängigkeit von dessen Bedarf in dem Stromspeicher (3, 3') gespeicherte elektrische Energie bereitgestellt werden kann, so dass von dem anzuschließenden, elektrischen Verbraucher für eine bestimmte Zeitspanne mehr Strom abgenommen werden kann als in dieser Zeitspanne erzeugt wird.

2. Verfahren nach Anspruch 1, **dadurch gekennzeichnet, dass** der Stromspeicher (3, 3') und der Stromerzeuger mit einer Netzspannung von 24 V betrieben werden.

3. Verfahren nach einem der Ansprüche 1 oder 2, **dadurch gekennzeichnet, dass** der maximale Ladestrom, mit dem das Verfahren betrieben wird, bis zu zwei Dritteln der maximal möglichen Leistung der Brennstoffzelle entspricht.

4. Verfahren nach einem der Ansprüche 1 bis 3, **dadurch gekennzeichnet, dass** durch Synchronisation von mehr als einem Wechselrichter (2, 2', 2") Starkstrom, insbesondere mit einer Spannung von wenigstens 400 V und 3600 W, bereitgestellt werden kann.

5. Verfahren nach einem der Ansprüche 1 bis 4, **dadurch gekennzeichnet, dass** ein jeweiliger Ladezustand des Stromspeichers (3, 3') erfasst wird und in Abhängigkeit von diesem Ladezustand des Stromspeichers (3, 3') alle weiteren Vorgänge der netzunabhängigen Versorgung mit elektrischer Energie gesteuert und geregelt werden.

6. Verfahren nach einem der Ansprüche 1 bis 5, **dadurch gekennzeichnet, dass** der wenigstens eine Wechselrichter (2, 2', 2") in Abhängigkeit von dem Ladezustand des Stromspeichers (3, 3') zugeschaltet und abgeschaltet wird.

7. Verfahren nach einem der Ansprüche 1 bis 6, **dadurch gekennzeichnet, dass** ein von dem Stromerzeuger bereitgestellter Ladestrom in Abhängigkeit von dem Ladezustand des Stromspeichers (3, 3') gesteuert wird.

8. Vorrichtung zur netzunabhängigen Versorgung mit elektrischer Energie aufweisend wenigstens einen Stromerzeuger zur Bereitstellung von Gleichspannung, wenigstens einen Anschluss (5, 5') für einen elektrischen Verbraucher, wenigstens einen Wechselrichter (2, 2', 2"), der zwischen dem Stromerzeuger und dem Anschluss (5, 5') für den elektrischen Verbraucher geschaltet ist sowie eine Steuer- und Bedieneinheit (7),
**dadurch gekennzeichnet,**
**dass** der Stromerzeuger durch wenigstens eine Brennstoffzelle (1) gebildet ist, dass der Brennstoffzelle (1) und dem Wechselrichter (2, 2', 2") wenigstens ein Stromspeicher (3, 3') zugeordnet ist, und
**dass** die Brennstoffzelle (1), der Wechselrichter (2, 2', 2") und der Stromspeicher (3, 3') jeweils über Verteilerschienen (4, 4') elektrisch leitend miteinander verbunden sind.

9. Vorrichtung nach Anspruch 8, **dadurch gekennzeichnet, dass** zwei Verteilerschienen (4, 4') vorgesehen sind, von denen eine erste Verteilerschiene (4) einem jeweils positiven Pol der Brennstoffzelle (1), des Wechselrichters (2, 2', 2") und des Stromspeichers (3, 3') zugeordnet ist und eine zweite Verteilerschiene (4') einem jeweils negativen Pol der Brennstoffzelle (1), des Wechselrichters (2, 2', 2") und des Stromspeichers (3, 3') zugeordnet ist.

10. Vorrichtung nach einem der Ansprüche 8 oder 9, **dadurch gekennzeichnet, dass** in die Vorrichtung mehr als ein Wechselrichter (2, 2', 2") integriert ist, wobei alle Wechselrichter (2, 2', 2") derart miteinander synchronisiert sind, dass an dem Anschluss (5, 5') für einen elektrischen Verbraucher Starkstrom, insbesondere mit einer Spannung von wenigstens 400 V, bereitgestellt werden kann.

11. Vorrichtung nach Anspruch 10, **dadurch gekennzeichnet, dass** einer der Wechselrichter (2) als Master ausgebildet ist, der von der Steuer- und Bedieneinheit (7) unmittelbar angesteuert wird, und dass die anderen Wechselrichter (2', 2") als von dem Master abhängige Slaves steuerungstechnisch an den Master angeschlossen sind.

12. Vorrichtung nach einem der Ansprüche 8 bis 11, **dadurch gekennzeichnet, dass** die Steuer- und Bedieneinheit (7) eine Fernzugriffseinrichtung (8) aufweist.

13. Vorrichtung nach einem der Ansprüche 8 bis 12, **dadurch gekennzeichnet, dass** alle Komponenten der Vorrichtung in einer transportablen Box (9) angeordnet und vor unberechtigtem Zugriff geschützt sind.

14. Vorrichtung nach einem der Ansprüche 8 bis 13, **dadurch gekennzeichnet, dass** die Brennstoffzelle (1) mit Methanol als Primärenergie betreibbar ist.
